# EUROPÄISCHE PATENTANMELDUNG

(11) **EP 1 084 794 A1**
(43) Veröffentlichungstag der Anmeldung: **21.03.2001**
(21) Anmeldenummer: 99118192.6
(22) Anmeldetag: 13.09.1999
(51) Int. Cl.: B23Q 7/10

(54) **Ladevorrichtung zum Beladen von Maschinen mit Teilen, wie Werkstücken, Paletten, Futterteilen, Werkzeugen od.dgl.**

(71) Anmelder: MASCHINENFABRIK BERTHOLD HERMLE AKTIENGESELLSCHAFT, D-78559 Gosheim (DE)
(72) Erfinder: Schorpp, Gerd, 78591 Durchhausen (DE); Aicher, Rainer, 78601 Mahlstetten (DE); Kohler, Rainer, 78595 Hausen o.V. (DE)
(74) Vertreter: Vetter, Hans, Dipl.-Phys. Dr.

(57) **Zusammenfassung**

Es wird eine Ladevorrichtung zum Beladen von Maschinen mit Teilen, wie Werkstücken, Paletten, Futterteilen, Werkzeugen od.dgl., aus einem neben der Maschine (33) angeordneten Magazin (29) vorgeschlagen. An einer horizontalen Führungsstrecke (11) wird ein Schlitten (10) motorisch geführt, an dem wenigstens ein um eine parallel zur Führungsstrecke (11) angeordnete Schwenkachse (24) mittels eines Schwenkantriebs schwenkbarer Ladearm vorgesehen ist. Am freien Ende des Ladearms (23,23') ist ein Greifer (26,26') zum Ergreifen der Teile (31) angeordnet. Das Magazin besitzt wenigstens eine Magazinstation, die in der Schwenkkreisbahn des oder der Greifer (26, 26') übereinander oder hintereinander angeordnete Aufnahmen (30) für die der Maschine zuzuführenden Teile (31) besitzt. Mit dieser Ladevorrichtung lassen sich beliebige Ablagepositionen bei minimalem Platzbedarf erreichen, wozu lediglich eine Schwenkeinheit und eine Lineareinheit erforderlich sind.

## Beschreibung

Die Erfindung betrifft eine Ladevorrichtung zum Beladen von Maschinen mit Teilen, wie Werkstücken, Paletten, Futterteilen, Werkzeugen od.dgl., aus einem neben der Maschine angeordneten Magazin.

Zum Beladen von Maschinen mit derartigen Teilen sind Roboter mit vielachsig bewegbaren Roboterarmen bekannt. Derartige Roboter weisen eine relativ komplizierte Konstruktion auf und sind sehr teuer in der Anschaffung. Bei größerer Entfernung des Magazins von der zu beladenden Maschine muß zusätzlich noch beispielsweise ein Linearfahrzeug eingesetzt werden, was die Kosten noch erhöht. Der Bewegungsablauf eines Roboterarms bedingt einen relativ großen freizuhaltenden Arbeitsbereich, wobei an die Zugänglichkeit der zu ladenden Teile gewisse Anforderungen gestellt werden. Weiter ist eine Ladeportalanordnung mit mehreren Linearachsen und/oder Schwenkachsen bekannt.

Eine Aufgabe der vorliegenden Erfindung besteht darin, eine Ladevorrichtung zu schaffen, die bei einfachem und kostengünstigem Aufbau mit einer sehr geringen Anzahl von Bewegungsachsen auskommt, und bei der die Entfernung des Magazins von der zu beladenden Maschine kaum eine Rolle spielt.

Diese Aufgabe wird erfindungsgemäß durch die Merkmale des Anspruchs 1 gelöst.

In vorteilhafter Weise kann erfindungsgemäß die Beladung im einfachsten Falle durch lediglich eine Linearbewegung und eine Schwenkbewegung durchgeführt werden, wobei hierdurch alle Aufnahmen im Magazin und die dort angeordneten Teile und alle Ablagestellen auf einer oder auf mehreren Maschinen bei relativ kleinem Arbeitsbereich der Ladevorrichtung erreicht werden können. Durch die Linearbewegung spielt die Entfernung nur eine untergeordnete Rolle. Die in vorteilhafter Weise in der Schwenkkreisbahn des oder der Greifer übereinander angeordnete Aufnahmen für die der Maschine zuzuführenden Teile erlauben eine sehr kompakte Anordnung der Teile bei minimalem Platzbedarf. Insgesamt wird dadurch eine sehr vielseitige und dabei kostengünstige Lösung erreicht.

Durch die in den Unteransprüchen aufgeführten Maßnahmen sind vorteilhafte Weiterbildungen und Verbesserungen der im Anspruch 1 angegebenen Ladevorrichtung möglich.

Die Führungsstrecke wird zweckmäßigerweise durch eine am Boden oder an einer Portalanordnung angeordnete Führungsschiene gebildet. Durch die oberhalb des Arbeitsraums der Maschine angeordnete Führungsstrecke ist der Zugang zum Arbeitsraum mittels des Ladearms leicht möglich, und dieser kann auch bei ungünstigen Platzverhältnissen bei geringem erforderlichen Freiraum von vorne in den Arbeitsraum ein- und ausschwenken. Bei einer Ausbildung als Portalanordnung besitzt diese in vorteilhafter Weise in einer Grundversion wenigstens zwei über die Führungsstrecke miteinander verbundene vertikale Portalstützen, wobei wenigstens ein aus mindestens einer Verlängerungs-Führungsschiene und wenigstens einer Portalstütze bestehendes Verlängerungselement zur Verlängerung der Portalanordnung vorgesehen ist. Die Portalanordnung kann dadurch in einfacher Weise je nach Entfernung des Magazins von der oder den jeweiligen Maschinen nach Bedarf dimensioniert werden. Eine solche Verlängerung erweist sich auch dann als vorteilhaft, wenn durch die Ladevorrichtung mehrere Maschinen aus einem oder mehreren Magazinen beladen werden sollen. Dabei kann sowohl die Führungsstrecke als auch die Verlängerung aus einzelnen zusammensteckbaren oder aneinanderreihbaren Schienenelementen bestehen.

In einer vorteilhaften Ausführung besteht der Schlitten im wesentlichen aus einem Führungsbereich und einem damit verbundenen Tragarm, wobei die Schwenkachse des wenigstens einen Ladearms im Bereich des freien Endes des Tragarms angeordnet ist.

Hierdurch kann die Schwenkachse des wenigstens einen Ladearms am Tragarm in der Höhe so positioniert werden, daß diese im wesentlichen der Höhe der wenigstens einen Maschinenablagestelle entspricht, um ein besonders exaktes Auflegen auf einer horizontalen Ablagefläche zu ermöglichen.

Der Tragarm ist vorzugsweise im wesentlichen vertikal ausgerichtet, wobei er auch vertikal verstell- oder bewegbar am Führungsbereich gehalten wird, um eine Anpassung an die Höhe der jeweiligen Maschinenablagestelle manuell oder motorisch zu erreichen.

Um die durch eine Schwenkbewegung des Ladearms der jeweiligen Maschine zugeführten Teile lagerichtig absetzen zu können, unabhängig von ihrer vorherigen Lage im Magazin, ist der Greifer am freien Ende des wenigstens einen Ladearms um eine im wesentlichen zur Längsrichtung des Ladearms ausgerichteten Achse drehbar gelagert und mittels eines Drehantriebs drehbar. Da sich bei einer 180° - Schwenkbewegung des Ladearms die Ausrichtung des jeweiligen Teils umkehrt, kann dies durch eine 180°-Schwenkbewegung des Greifers wieder kompensiert werden. Vorzugsweise ist dabei der oder die Greifer als Doppelgreifer ausgebildet, um einen schnelleren Arbeitsablauf zu erreichen.

Zwei unabhängig voneinander schwenkbare Ladearme bilden einen Doppelschwenkarm, wobei jeder der freien Endbereiche einen Greifer trägt. Hierdurch kann die Geschwindigkeit beim Be- und Entladen einer Maschine wesentlich erhöht werden.

Zweckmäßigerweise sind zur Vergrößerung der Ladekapazität mehrere Magazinstationen nebeneinander angeordnet, wobei Leerstationen oder Abstände zum Durchschwenken des oder der Greifer dazwischen angeordnet sind.

Ein Ausführungsbeispiel der Erfindung ist in der Zeichnung dargestellt und in der nachfolgenden Beschreibung näher erläutert. Es zeigen:
- Fig. 1: eine Ladevorrichtung und ein Magazin neben einer schematisch strichpunktiert dargestellten Maschine in einer Seitenansicht als Ausführungsbeispiel der Erfindung,
- Fig. 2: die Ladevorrichtung allein in einer Ansicht von vorne und
- Fig. 3: die Gesamtanordnung in einer Ansicht von oben.

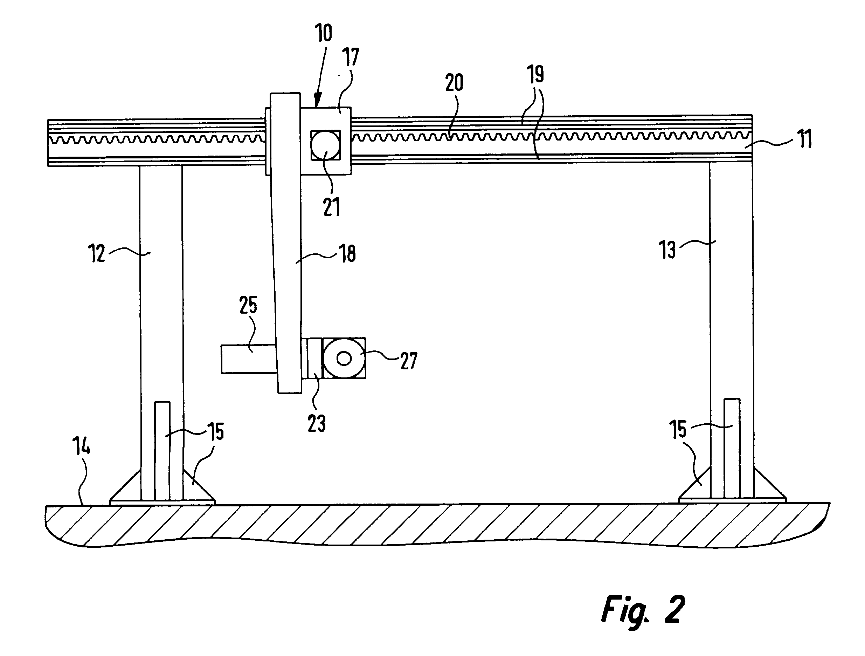

Bei dem in den drei Figuren in verschiedenen Ansichten dargestellten Ausführungsbeispiel einer Ladevorrichtung zum Beladen von Maschinen ist ein Schlitten 10 entlang einer trägerartigen horizontalen Führungsstrecke 11 mittels eines Zahnstangenantriebs bewegbar. Die Führungsstrecke 11 wird dabei durch den horizontalen Träger einer Portalanordnung gebildet, der gemäß Fig. 2 mittels zweier Portalstützen 12, 13 beabstandet und parallel zum Boden 14 gehalten wird. Die Portalstützen 12, 13 sind an ihren unteren Enden mit Haltefüßen 15 versehen, die am Boden 14 beispielsweise mittels Schrauben fixierbar sind.

Der Schlitten 10 besteht aus einem an der Führungsstrecke 11 mittels Führungen 16 geführten Führungsbereich 17, an dem ein sich im wesentlichen vertikal nach unten erstreckender Tragarm 18 befestigt ist. Die Führungen 16 gleiten dabei entlang von zwei Einzelschienen 19 der Führungsstrecke 11. Zwischen den Einzelschienen 19 ist eine Zahnstange 20 angeordnet, in die ein von einem Antriebsmotor 21 angetriebenes Zahnrad 22 eingreift. Der Antriebsmotor 21 ist als Positioniermotor ausgebildet.

Anstelle eines Zahnstangenantriebs können selbstverständlich auch andere bekannte Schlittenantriebssysteme treten.

Der Tragarm 18 kann im einfachsten Falle fest am Führungsbereich 17 fixiert sein, jedoch ist auch eine manuelle oder motorische Vertikalverstellung möglich, damit zwei am unteren Endbereich des Tragarms 18 drehbar gelagerte und einen Doppelschwenkarm bildende Ladearme 23, 23' höhenverstellt werden können, um beispielsweise eine Höhenanpassung an Ablagestellen von Maschinen vornehmen zu können.

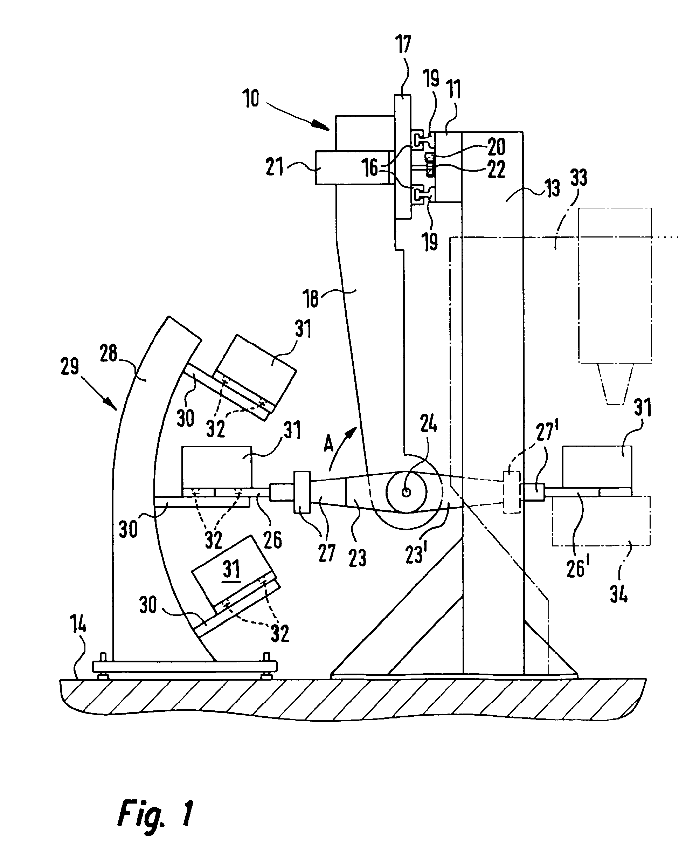

Die Drehachse 24 der Ladearme 23, 23' ist parallel zur Längsrichtung der Führungsstrecke 11 ausgerichtet, so daß die Schwenkebene der Ladearme 23, 23' senkrecht zur Längsrichtung dieser Führungsstrecke 11 ausgerichtet ist. Die Ladearme 23, 23' erstrecken sich in der Position gemäß Fig. 1 somit horizontal nach zwei entgegengesetzten Seiten. Eine beispielsweise als CNC-Schwenkantrieb ausgebildete Antriebsanordnung 25 dient zum Drehantrieb und zur Winkelpositionierung der Ladearme 23, 23'.

An den beiden freien Enden der Ladearme 23,23' ist jeweils ein Greifer 26,26' mittels eines hydraulischen, pneumatischen oder elektrischen Schwenkantriebs 27,27' um eine in der Längsrichtung des jeweiligen Ladearms 23,23' ausgerichtete Schwenkachse schwenkbar angeordnet, wobei die Greifer 26,26' durch den Schwenkantrieb 27, 27'beliebig positionierbar sind.

Ein aus mehreren nebeneinander angeordneten Magazinstationen 28 bestehendes Magazin 29 ist neben der Portalanordnung und parallel zu dieser angeordnet. Jede Magazinstation 28 besitzt mehrere in der Schwenkkreisbahn der Greifer 26,26' angeordnete Aufnahmen 30 für Teile, wie Werkstücke, Paletten 31, Futterteile, Spezialwerkzeuge od.dgl., mit denen eine oder mehrere Maschinen 33 beladen werden sollen. Im Ausführungsbeispiel besitzt jede Magazinstation 28 jeweils drei Aufnahmen 30, wobei diese Zahl selbstverständlich variierbar ist. Die im Ausführungsbeispiel als zu beladende Teile dargestellten Paletten 31 besitzen an ihrer unteren Auflageseite Vorsprünge 32, die in entsprechende Ausnehmungen der Aufnahmen 30 eingreifen, um eine sichere Positionierung zu ermöglichen. Diese Aufnahmen 30 sind im Ausführungsbeispiel gemäß Fig. 1 als Auflageplatten bzw. -rahmen ausgebildet. Alternativ hierzu können beispielsweise auch Hängeaufnahmen, Magazinfächer, Einschübe oder spezielle Halter treten.

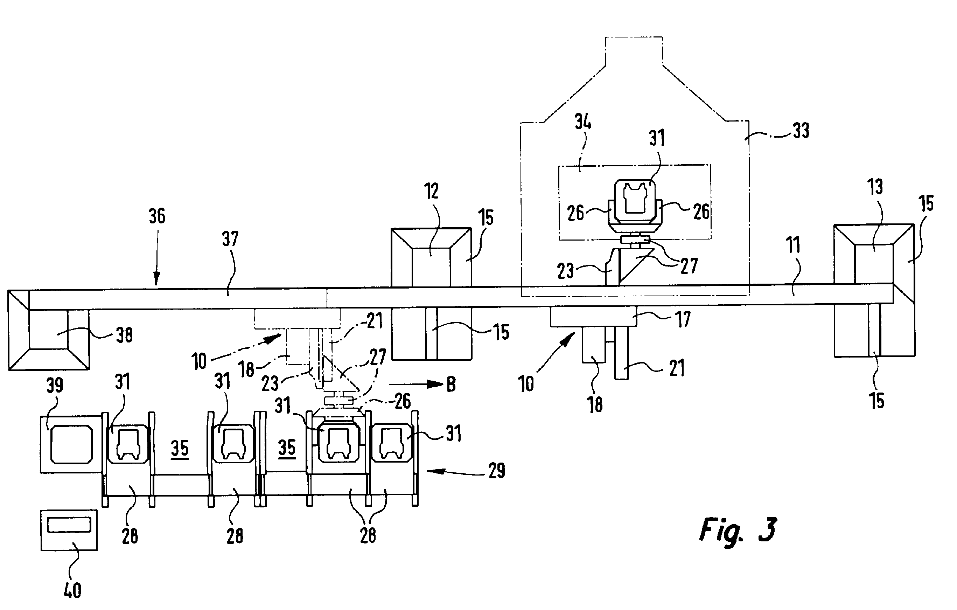

Gemäß Fig. 3 ist eine schematisch strichpunktiert dargestellte Maschine 33 an der relativ zum Magazin 29 gegenüberliegenden Seite der Ladevorrichtung angeordnet. Diese Maschine, bei der es sich beispielsweise um ein Bearbeitungszentrum oder eine sonstige Werkzeugmaschine handeln kann, besitzt einen Bearbeitungstisch 34, auf den Paletten 31 oder sonstige Werkstücke nacheinander zur Bearbeitung abgelegt werden sollen. Hierzu ergreift der zur Vereinfachung in Fig. 2 oder 3 als einzelner Arm dargestellte Ladearm 23 mit seinem Greifer 26 gemäß Fig. 2 oder 3 eine Palette 31. Durch ein geringfügiges Anheben in der Schwenkrichtung A gelangen die Vorsprünge 32 außer Eingriff mit den entsprechenden Ausnehmungen, so daß durch eine Horizontalbewegung des Schlittens 10 der Greifer 26 mit der aufgenommenen Palette 31 in einen freien Zwischenraum 35 zwischen zwei Magazinstationen 28 gelangt und nun in der Schwenkrichtung A nach oben geschwenkt werden kann. Gleichzeitig führt der Schlitten 10 eine Horizontalbewegung in der Richtung B aus, bis er von der gestrichelt dargestellten Position gemäß Fig. 3 in die mit durchgezogenen Linien dargestellte Endposition gelangt. Die Schwenkbewegung in der Schwenkrichtung A wird dabei so lange fortgesetzt, bis nach einem Schwenkwinkel von ca. 180° die Palette 31 auf den Bearbeitungstisch 34 gesetzt werden kann. Während dieser Schwenkbewegung wird der Greifer 26 mittels des Schwenkantriebs 27 ebenfalls um 180° verschwenkt, damit die Palette 31 beim Aufsetzen wieder ihre korrekte Position einnimmt.

Bei der Ausbildung als Doppelschwenkarm kann mittels der beiden der Ladearme 23, 23' eine neue Palette zum Bearbeitungstisch 34 befördert und gleichzeitig eine bearbeitete Palette zum Magazin 29 zurückschwenkt werden.

Ist die Maschine 33 relativ weit vom Magazin 29 entfernt oder sollen mehrere nebeneinander angeordnete Maschinen 33 aus demselben Magazin 29 beladen werden, so kann die portalartige Ladevorrichtung auch verlängert werden. Hierzu dient eine Verlängerungseinrichtung 36, die aus einer Verlängerungs-Führungsschiene 37 und einer weiteren Portalstütze 38 besteht. Sowohl die Führungsstrecke 11 als auch die Verlängerungs- und Führungsschiene 37 bestehen beispielsweise (nicht dargestellt) aus einzelnen zusammensteckbaren oder aneinanderreihbaren Schienenelementen, so daß beliebige Längen realisierbar sind.

Gemäß Fig. 3 befinden sich neben dem Magazin 29 noch ein Rüstplatz 39 und ein Bedien-Panel 40. Eine nicht dargestellte Trennwand mit Schwenk- und/oder Schiebetüren kann als Schutzwandung das Magazin 29 zur Bedienerseite hin abschirmen.

In Abwandlung des dargestellten Ausführungsbeispiels kann die Führungsstrecke 11 anstelle an einer Portalanordnung auch am Boden oder der Decke des jeweiligen Raums fixiert sein. Bei einer Bodenversion erstreckt sich dann der Tragarm 18 vertikal nach oben. Wesentlich ist dabei lediglich, daß die Drehachse 24 im wesentlichen in der Höhe der Ablagevorrichtung der jeweiligen Maschine angeordnet oder entsprechend verstellbar ausgebildet ist.

In einer einfacheren Ausführung kann der Schwenkantrieb 27, 27' der Greifer 26, 26' auch entfallen. In diesem Falle müssen die Paletten 31, Werkstücke oder sonstige zu beladende Teile so im Magazin 29 angeordnet sein, daß sie nach einer Schwenkbewegung des Ladearms 23 um 180 ihre korrekte Endlage bezüglich oben-unten einnehmen. Dabei ist der Schwenkwinkel des Schwenkarms selbstverständlich jeweils vom Winkelabstand der jeweiligen Aufnahme 30 im Magazin 29 und der Ablageebene abhängig und kann somit auch größer oder kleiner als 180 sein.

Die zu beladenden Maschinen können selbstverständlich auch auf derselben Seite der Ladevorrichtung angeordnet sein wie das Magazin. In diesem Falle erfolgt nach dem Ergreifen des jeweiligen Teils lediglich eine Schwenkbewegung in der Schwenkrichtung A, die das jeweilige Teil über das Magazin anhebt. Nach der entsprechenden Horizontalbewegung durch den Schlitten 10 erfolgt dann ein Zurückschwenken in der Gegenrichtung auf den jeweiligen Ablage- bzw. Bearbeitungstisch 34.

Die Greifer 26, 26' können in einer alternativen Ausgestaltung auch als Doppelgreifer ausgebildet sein, um die Handhabung zu verbessern und zu beschleunigen.

## Patentansprüche

1. Ladevorrichtung zum Beladen von Maschinen mit Teilen, wie Werkstücken, Paletten, Futterteilen, Werkzeugen od.dgl., aus einem neben der Maschine (33) angeordneten Magazin (29), mit einem an einer horizontalen Führungsstrecke (11) motorisch geführten Schlitten (10), mit wenigstens einem an diesem Schlitten (10) um eine parallel zur Führungsstrecke (11) angeordnete Schwenkachse (24) mittels eines Schwenkantriebs (25) schwenkbaren Ladearm (23,23') und mit einem zum Ergreifen der Teile (31) ausgebildeten Greifer (26,26') am freien Ende des Ladearms (23, 23'), wobei das Magazin (29) wenigstens eine Magazinstation (28) besitzt, die in der Schwenkkreisbahn des oder der Greifer (26,26') übereinander oder hintereinander angeordnete Aufnahmen (30) für die der Maschine (33) zuzuführenden Teile (31) besitzt.

2. Ladevorrichtung nach Anspruch 1, dadurch gekennzeichnet, daß die Führungsstrecke (11) durch wenigstens eine am Boden oder an einer Portalanordnung angeordnete Führungsschiene (19) gebildet wird.

3. Ladevorrichtung nach Anspruch 2, dadurch gekennzeichnet, daß die Portalanordnung in einer Grundversion wenigstens zwei über die Führungsstecke (11) miteinander verbundene vertikale Portalstützen (12, 13) besitzt, und daß wenigstens ein aus mindestens einer Verlängerungs-Führungsschiene (37) und wenigstens einer Portalstütze (38) bestehendes Verlängerungselement (36) zur Verlängerung der Portalanordnung vorgesehen ist.

4. Ladevorrichtung nach einem der vorhergehenden Ansprüche, dadurch gekennzeichnet, daß die Führungsstrecke (11) und/oder die Verlängerungs-Führungsschiene (37) jeweils aus einzelnen zusammensteckbaren oder aneinanderreihbaren Schienenelementen besteht.

5. Ladevorrichtung nach einem der vorhergehenden Ansprüche, dadurch gekennzeichnet, daß der Schlitten (10) im wesentlichen aus einem Führungsbereich (17) und einem damit verbundenen Tragarm (18) besteht, wobei die Schwenkachse (24) des wenigstens einen Ladearms (23, 23') im Bereich des freien Endes des Tragarms (18) angeordnet ist.

6. Ladevorrichtung nach Anspruch 5, dadurch gekennzeichnet, daß der Tragarm (18) im wesentlichen vertikal ausgerichtet ist und vorzugsweise vertikal verstell- oder bewegbar am Führungsbereich (17) gehalten wird.

7. Ladevorrichtung nach Anspruch 5 oder 6, dadurch gekennzeichnet, daß die Schwenkachse (24) des wenigstens einen Ladearms (23,23') im wesentlichen in der Höhe der wenigstens einen Maschinenablagestelle (34) am Tragarm (18) positioniert ist.

8. Ladevorrichtung nach einem der vorhergehenden Ansprüche, dadurch gekennzeichnet, daß der Greifer (26,26') am freien Ende des wenigstens einen Ladearms (23,23') um eine im wesentlichen zur Längsrichtung des Ladearms (23,23') ausgerichtete Achse drehbar gelagert und mittels eines Drehantriebs (27, 27') drehbar ist.

9. Ladevorrichtung nach einem der vorhergehenden Ansprüche, dadurch gekennzeichnet, daß der Greifer (26, 26') als Doppelgreifer ausgebildet ist.

10. Ladevorrichtung nach einem der vorhergehenden Ansprüche, dadurch gekennzeichnet, daß zwei unabhängig voneinander schwenkbare Ladearme (23, 23') einen Doppelschwenkarm bilden.

11. Ladevorrichtung nach einem der vorhergehenden Ansprüche, dadurch gekennzeichnet, daß mehrere Magazinstationen (28) nebeneinander angeordnet sind, wobei Leerstationen oder Abstände (35) zum Durchschwenken des oder der Greifer (26, 26') dazwischen angeordnet sind.
